# EUROPEAN PATENT APPLICATION

(11) **EP 4 621 606 A1**
(43) Date of publication of application: **24.09.2025**
(21) Application number: 23893492.1
(22) Date of filing: 18.10.2023
(51) Int. Cl.: G06F 16/957

(54) **SUB-APPLICATION PAGE PROCESSING METHOD AND APPARATUS, AND COMPUTER DEVICE AND STORAGE MEDIUM**

(30) Priority: 25.11.2022 CN 202211489870
(71) Applicant: Tencent Technology (Shenzhen) Company Limited, Shenzhen, Guangdong 518057 (CN)
(72) Inventor: FU, Boquan, Shenzhen, Guangdong 518057 (CN)
(74) Representative: Reddie & Grose LLP
(86) International application number: PCT/CN2023/125145
(87) International publication number: WO 2024/109400

(57) **Abstract**

A sub-application page processing method and apparatus, and a computer device, a storage medium and a computer program product. The method comprises: when an event of requesting the acquisition of a sub-application page is detected, acquiring a page code of the sub-application page, wherein the sub-application page refers to a page displayed in a sub-application (202); parsing the page code to obtain a page parsing result, traversing a code set in the page parsing result, and creating a page node tree corresponding to the sub-application page, wherein the page node tree is a tree structure which is generated on the basis of page nodes of the sub-application page (204); creating a first instance object for converting the page node tree, and establishing a binding relationship between the first instance object and the sub-application page (206); once the binding relationship is established, converting the page node tree to an interface calling form by using the first instance object, so as to obtain interface calling information corresponding to the page node tree (208); and performing page drawing on the basis of the interface calling information, so as to generate the sub-application page (210).

## Description

### RELATED APPLICATION

This application claims priority to Chinese Patent Application No. 2022114898700, entitled "SUB-APPLICATION PAGE PROCESSING METHOD AND APPARATUS, AND COMPUTER DEVICE AND STORAGE MEDIUM" filed on November 25, 2022, which is incorporated herein by reference in its entirety.

### FIELD OF THE TECHNOLOGY

This application relates to the field of page processing technologies, and in particular, to a sub-application page processing method and apparatus, a computer device, a storage medium, and a computer program product.

### BACKGROUND OF THE DISCLOSURE

With rapid development of computer technologies, page processing technologies also continuously develop, and gradually develop from only web (World Wide Web, WWW)-based page (namely, web page) processing to other non-web-based page processing, for example, mini program page processing. A mini program is a lightweight application that can be run and used in a parent application without being downloaded or installed.

In a conventional method, a mini program page processing method is as follows: When a page of a mini program needs to be opened, page code corresponding to the page is obtained, the page code is parsed to obtain a page parsing result, and a document object model (DOM) interface is invoked based on the page parsing result to execute a drawing instruction for page drawing, to generate the page of the mini program.

However, in the conventional method, in the manner of invoking the DOM interface to execute the drawing instruction for page drawing, a page rendering speed is low because the DOM interface includes too many components.

### SUMMARY

According to embodiments provided in this application, a sub-application page processing method and apparatus, a computer device, a computer-readable storage medium, and a computer program product are provided.

According to an aspect, this application provides a sub-application page processing method, performed by a computer device and including:
in response to an event of requesting to obtain a sub-application page being detected, obtaining page code of the sub-application page, the sub-application page being a page displayed when running a sub-application;
parsing the page code to obtain a page parsing result, and traversing a code set in the page parsing result to create a page node tree based on a page node of the sub-application page;
creating a first instance object for converting the page node tree, and establishing a binding relationship between the first instance object and the sub-application page;
converting the page node tree into an interface call form by using the first instance object, to obtain interface call information corresponding to the page node tree; and
generating the sub-application page based on the interface call information.

According to another aspect, this application further provides a sub-application page processing apparatus, including:
a code obtaining module, configured to: in response to an event of requesting to obtain a sub-application page being detected, obtain page code of the sub-application page, the sub-application page being a page displayed when running a sub-application;
a node tree generation module, configured to parse the page code to obtain a page parsing result, and traverse a code set in the page parsing result to create a page node tree based on a page node of the sub-application page;
a page initialization module, configured to create a first instance object for converting the page node tree, and establish a binding relationship between the first instance object and the sub-application page;
a node tree conversion module, configured to: convert the page node tree into an interface call form by using the first instance object, to obtain interface call information corresponding to the page node tree; and
a page drawing module, configured to generating the sub-application page based on the interface call information.

According to another aspect, this application further provides a computer device, the computer device including a memory and a processor, the memory storing computer-readable instructions, and operations in method embodiments of this application being performed when the processor executes the computer-readable instructions.

According to another aspect, this application further provides a computer-readable storage medium, the computer-readable storage medium having computer-readable instructions stored therein, and operations in method embodiments of this application being performed when the computer-readable instructions are executed by a processor.

According to another aspect, this application further provides a computer program product, the computer program product including computer-readable instructions, and operations in method embodiments of this application being performed when the computer-readable instructions are executed by a processor.

Details of one or more embodiments of this application are provided in the accompanying drawings and descriptions below. Other features and advantages of this application become clear with reference to the specification, the accompanying drawings, and the claims.

### BRIEF DESCRIPTION OF THE DRAWINGS

To describe technical solutions in embodiments of this application or the related art more clearly, the following briefly describes accompanying drawings required for describing the embodiments or the related art. Clearly, the accompanying drawings in the following description show merely embodiments of this application, and a person of ordinary skill in the art may still derive other drawings from the disclosed accompanying drawings without creative efforts.
FIG. 1 is a diagram of an application environment of a sub-application page processing method according to an embodiment.
FIG. 2 is a schematic flowchart of a sub-application page processing method according to an embodiment.
FIG. 3 is a schematic diagram of converting a page node tree into an interface call form according to an embodiment.
FIG. 4 shows creating a first instance object for converting a page node tree according to an embodiment.
FIG. 5 is a schematic flowchart of a sub-application page processing method according to another embodiment.
FIG. 6 is a schematic diagram of code writing by a developer to drawing and display of a sub-application page according to an embodiment.
FIG. 7 is a schematic diagram of code writing by a developer to drawing and display of a sub-application page according to another embodiment.
FIG. 8 is a schematic diagram of an instance call relationship according to an embodiment.
FIG. 9 is a schematic flowchart of a sub-application page processing method according to still another embodiment.
FIG. 10 is a schematic flowchart of obtaining first call information of a component node according to an embodiment.
FIG. 11 is a structural block diagram of a sub-application page processing apparatus according to an embodiment.
FIG. 12 is a diagram of an internal structure of a computer device according to an embodiment.

### DESCRIPTION OF EMBODIMENTS

The technical solutions in embodiments of this application are clearly and completely described in the following with reference to the accompanying drawings in the embodiments of this application. It is clear that the described embodiments are merely some rather than all of the embodiments of this application. All other embodiments obtained by a person of ordinary skill in the art based on embodiments of this application without creative efforts shall fall within the protection scope of this application.

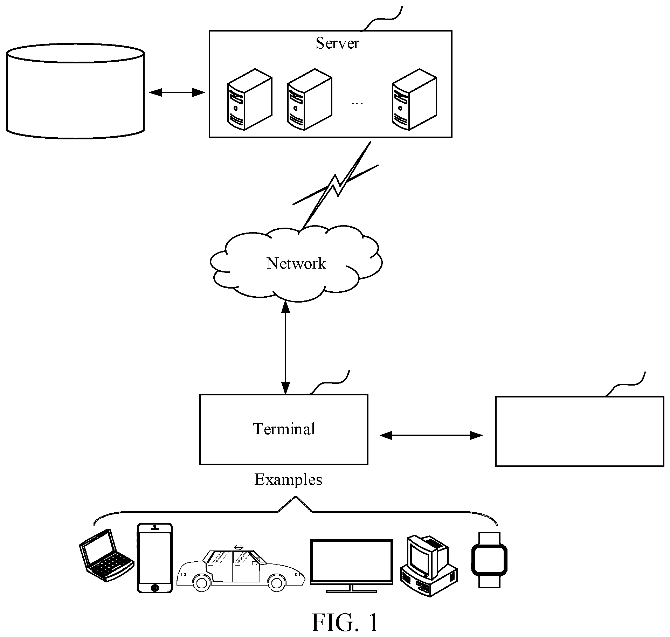

A sub-application page processing method provided in embodiments of this application may be applied to an application environment shown in FIG. 1. A user 102 using a terminal may perform an operation on the terminal 104, and the terminal 104 communicates with a server 106 through a network. A data storage system may store data that the server 106 needs to process. The data storage system may be integrated in the server 106, or may be deployed on a cloud or another server.

The user 102 may perform an operation on the terminal 104 to obtain a sub-application page. When detecting an event of requesting to obtain a sub-application page, the terminal 104 obtains page code of the sub-application page from the server 106, the sub-application page being a page displayed in a sub-application; parses the page code to obtain a page parsing result, and traverses a code set in the page parsing result to create a page node tree corresponding to the sub-application page, the page node tree being a tree structure generated based on a page node of the sub-application page; creates a first instance object for converting the page node tree, and establishes a binding relationship between the first instance object and the sub-application page; in a case that the binding relationship is established, converts the page node tree into an interface call form by using the first instance object, to obtain interface call information corresponding to the page node tree; and performs page drawing based on the interface call information to generate the sub-application page.

The terminal 104 may be but is not limited to a desktop computer, a notebook computer, a smartphones, a tablet computer, an Internet of Things device, and a portable wearable device. The Internet of Things device may be a smart speaker, a smart television, a smart air conditioner, a smart in-vehicle device, or the like. The portable wearable device may be a smart watch, a smart band, a head-mounted device, or the like. The server 106 may be implemented by using an independent server or a server cluster that includes a plurality of servers.

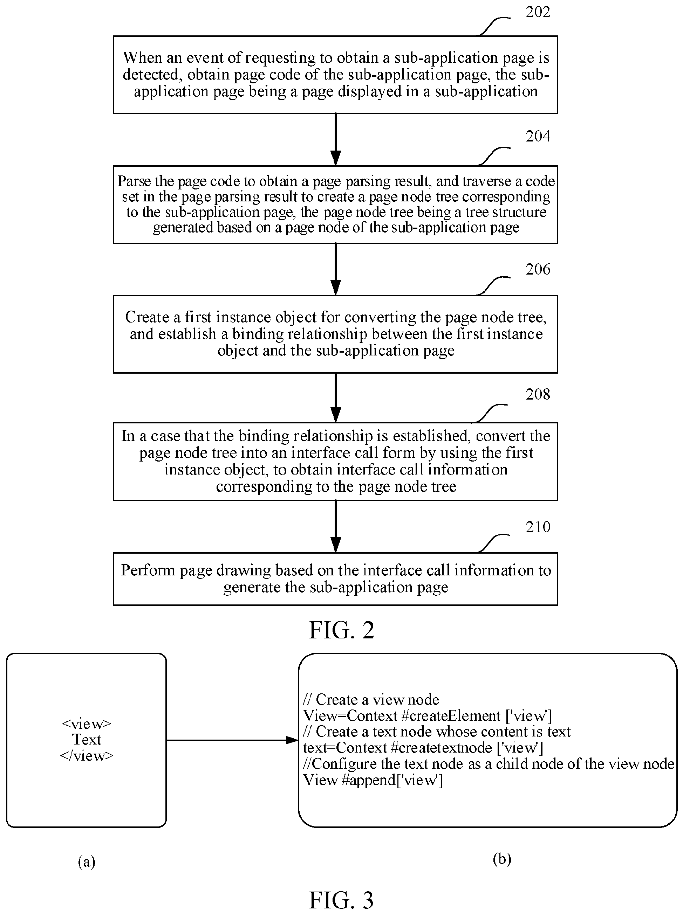

In an embodiment, as shown in FIG. 2, a sub-application page processing method is provided. The method may be performed by a terminal or a server alone, or may be jointly performed by a terminal and a server. In this embodiment of this application, an example in which the method is applied to a terminal is used for description. The method includes the following operations:

Operation 202: When an event of requesting to obtain a sub-application page is detected, obtain page code of the sub-application page, the sub-application page being a page displayed in a sub-application.

The sub-application is an application that can be implemented in an environment provided by a parent application. The parent application is an application that carries the sub-application, and provides an environment for implementing the sub-application. The parent application is a native application. The native application is an application that can directly run in an operating system. The sub-application can run based on the parent application without being installed on the operating system, and is a lightweight application. The sub-application may include sub-applications in various scenarios, such as an instant messaging sub-application, a mobile payment sub-application, and a game sub-application. Provided that an application meets the characteristic of being a lightweight application that runs based on a parent application without being downloaded or installed, the application may be referred to as a sub-application.

The event of requesting to obtain the sub-application page is configured for obtaining the sub-application page. For example, the event of requesting to obtain the sub-application page may be specifically an event of requesting to obtain an initial page of the sub-application upon access to the sub-application. For another example, the event of requesting to obtain the sub-application page may be specifically an event of requesting to obtain another page in a case that an initial page is displayed in the sub-application, namely, an event of switching from the initial page to display of the another page.

The page code is code that conforms to a page code structure of the sub-application and that represents the sub-application page. The page code structure of the sub-application is a structure of page code supported by the sub-application. To be specific, only page code that meets the page code structure of the sub-application is supported by the sub-application, so that a page can be run in the sub-application. For example, the page code may be specifically code generated based on a markup language supported by the sub-application. For example, the markup language supported by the sub-application may be WeiXin Markup Language (WXML). The WXML is a set of markup language designed for a mini program framework. In combination with a basic component and an event system, a page structure may be built.

Specifically, when detecting the event of requesting to obtain the sub-application page, the terminal obtains the page code of the sub-application page. During specific application, in a case that the sub-application is opened, the event of requesting to obtain the sub-application page may be detected. If sub-application code corresponding to the sub-application is stored on the terminal, the page code of the sub-application page may be directly obtained from the sub-application code. If the sub-application code corresponding to the sub-application is not stored on the terminal, the sub-application code needs to be pulled from a server that stores the sub-application code corresponding to the sub-application, and then the page code of the sub-application page is obtained from the sub-application code.

During specific application, if the sub-application corresponding to the sub-application page is opened for the first time, sub-application code corresponding to the sub-application may not be stored on the terminal, and the sub-application code needs to be pulled, based on an application identifier of the sub-application, from a server that stores the sub-application code corresponding to the sub-application. If the sub-application corresponding to the sub-application page is opened not for the first time, the sub-application code corresponding to the sub-application is stored on the terminal.

During specific application, the sub-application code includes page code of all sub-application pages that can be displayed in the sub-application, and page code of each sub-application page has a corresponding page identifier. The terminal may query the sub-application code based on a page identifier of a sub-application page that needs to be opened, to obtain page code of the sub-application page.

Operation 204: Parse the page code to obtain a page parsing result, and traverse a code set in the page parsing result to create a page node tree corresponding to the sub-application page, the page node tree being a tree structure generated based on a page node of the sub-application page.

The page parsing result is a result obtained by parsing the page code. The page code is usually code generated based on the markup language supported by the sub-application. However, a runtime environment of a sub-application rendering layer on the terminal usually cannot directly interpret the page code. Therefore, the page code needs to be parsed to obtain the page parsing result. For example, the page parsing result may be specifically code that is obtained by parsing the page code and that can be directly interpreted by the runtime environment of the sub-application rendering layer. For example, the page parsing result may be specifically JavaScript code obtained by parsing the page code. JavaScript is a lightweight interpreted or just-in-time compiled programming language with first-class functions. Although JavaScript is well-known as a scripting language for developing web pages, JavaScript is also used in many non-browser environments. JavaScript is a prototype-based programming language and a multi-paradigm dynamic scripting language, and supports object-oriented, imperative, declarative, and functional programming paradigms.

The page node tree is a tree structure generated based on page nodes of the sub-application page, and is a tree obtained by synthesizing all page nodes of the sub-application page. To be specific, the page node tree is obtained by splicing the page nodes of the sub-application page, and includes names, attribute values, event callback functions, and other information of all the page nodes of the sub-application page. The page node is a node that appears on the sub-application page. All page content of the sub-application page may be represented by page nodes. The page node is a most basic component of the sub-application page, and each part of the sub-application page may be referred to as a node.

Specifically, the terminal parses the page code by using a preconfigured parsing tool to obtain the page parsing result, and then traverses the code set in the page parsing result to create the page node tree corresponding to the sub-application page. The preconfigured parsing tool may be configured based on an actual application scenario. This is not limited herein in this embodiment. For example, the preconfigured parsing tool may be a preconfigured markup language compiler. The markup language compiler may compile the page code and output a compilation result, namely, the page parsing result. During specific application, the markup language may be the WXML. In this case, the preconfigured markup language compiler may be a binary WXML compiler. The WXML compiler receives a WXML code file, parses the WXML code file, and then outputs JavaScript code.

Operation 206: Create a first instance object for converting the page node tree, and establish a binding relationship between the first instance object and the sub-application page.

In object-oriented programming, a "class" is referred to as an "instance" after instantiation. A "class" is static without occupying process memory, while an "instance" has dynamic memory. An instance represents a collection of some programs. In this embodiment, the first instance object is a custom instance object for converting the page node tree, and includes a collection of programs for converting the page node tree. The establishing a binding relationship means binding the first instance object to the sub-application page, so that the first instance object can be used to generate the sub-application page.

Specifically, because the first instance object is also obtained through instantiation, the terminal first creates a first interface class for converting the page node tree, and then creates, based on the first interface class, the first instance object for converting the page node tree. The first interface class includes a logical method for converting the page node tree. In a case that the first instance object is obtained through instantiation and the binding relationship between the first instance object and the sub-application page is established, the page node tree may be converted into an interface call form by using the logical method for converting the page node tree.

The establishing a binding relationship between the first instance object and the sub-application page means binding the first instance object to the sub-application page during initialization of the sub-application page. During specific application, a root component instance corresponding to the sub-application page is created during initialization of the sub-application page. Therefore, provided that the root component instance is bound to the first instance object when the root component instance is created, the binding relationship between the first instance object and the sub-application page can be established.

Operation 208: In a case that the binding relationship is established, convert the page node tree into an interface call form by using the first instance object, to obtain interface call information corresponding to the page node tree.

The interface call information is a collection of call information that can implement the page node tree. For example, as shown in FIG. 3, if a partial structure of the page node tree, as shown in (a) in FIG. 3, includes a view node and a text node whose content is text, and the text node is a child node of the view node, interface call information corresponding to the partial structure may be shown in (b) in FIG. 3. The interface call information includes call information for creating a view node, call information for creating a text node whose content is text, and call information for setting the text node to be a child node of the view node.

Specifically, in a case that the binding relationship is established, the page node tree may be converted into the interface call form by using the logical method for converting the page node tree in the first instance object, to obtain the interface call information corresponding to the page node tree. During specific application, the first instance object provides first interface configuration information for converting the page node tree. The first interface configuration information includes invokable interfaces provided by the first instance object and descriptions of the interfaces. The converting the page node tree into an interface call form by using the first instance object, to obtain interface call information corresponding to the page node tree is: determining, based on the first interface configuration information, an interface for implementing the page node tree from the invokable interfaces provided by the first instance object, and using the interface for implementing the page node tree as the interface call information corresponding to the page node tree.

Operation 210: Perform page drawing based on the interface call information to generate the sub-application page.

Specifically, the terminal may execute a corresponding drawing instruction based on the interface call information to perform page drawing to generate the sub-application page. During specific application, because the interface call information is obtained by converting the page node tree into the interface call form, interface call may be performed based on the interface call information to execute the corresponding drawing instruction to perform page drawing. The sub-application page may be generated after the page drawing is completed.

In the foregoing sub-application page processing method, when an event of requesting to obtain a sub-application page is detected, obtained page code of the sub-application page is parsed to obtain a page parsing result, and a code set in the page parsing result is traversed to create a page node tree representing a page structure of the sub-application page, so that the sub-application page can be represented in the form of the page node tree. A first instance object for converting the page node tree is created, and a binding relationship between the first instance object and the sub-application page is established, so that the created first instance object can be used during generation of the sub-application page. In this way, the first instance object can be directly used to convert the page node tree into an interface call form to obtain interface call information corresponding to the page node tree, and page drawing is performed based on the interface call information to generate the sub-application page. In the entire process, the page node tree is directly converted into the interface call form without using a DOM interface as an intermediate bridge for page rendering, so that a page rendering speed can be increased.

In an embodiment, the creating a first instance object for converting the page node tree, and establishing a binding relationship between the first instance object and the sub-application page includes:
obtaining, based on a protocol mode of a preconfigured interface protocol, a first interface class for converting the page node tree, the first interface class including a logical method for converting the page node tree;
creating, based on the first interface class, the first instance object for converting the page node tree; and
creating, by using the first instance object as a creation parameter, a root component instance corresponding to the sub-application page to establish the binding relationship between the first instance object and the sub-application page.

The interface protocol is an intermediate bridge that links a sub-application component organization framework and page rendering, and is the basis for converting the page node tree into the interface call form. The interface protocol provides at least one protocol mode for use, and the interface protocol defines a logical method for converting the page node tree. The protocol mode is a mode provided by the interface protocol for converting the page node tree, and may be configured based on an actual application scenario. All protocol modes each have a corresponding interface, and provide different protocol content. To be specific, different logical methods for converting the page node tree are defined in the protocol modes. For example, the protocol mode may be specifically a composed mode, which is a preferred mode, is easy to use, and indicates that the protocol operates in a shadow tree and the page node tree. For another example, the protocol mode may be a shadow mode, which is a mode based on the shadow tree and has good performance. However, the protocol is complex, and this mode indicates that the protocol operates only in the shadow tree. In the shadow mode, during the conversion of the page node tree into the interface call form, the shadow tree usually needs to be converted into an interface call form first, and then conversion from the shadow tree to the page node tree is implemented. For still another example, the protocol mode may be specifically DOM-like (similar to a DOM interface mode), which is applicable to a DOM protocol and is usually configured for adapting to a DOM interface.

The first interface class is an interface corresponding to the protocol mode, and includes a logical method for converting the page node tree. The root component instance is an instance of a page root component. Each sub-application page has a corresponding component, which is referred to as a page root component of the sub-application page. During initialization of the sub-application page, an instance of the page root component, namely, a root component instance, needs to be created.

Specifically, the terminal obtains, based on the protocol mode of the preconfigured interface protocol, the first interface class that corresponds to the protocol mode and that is configured for converting the page node tree, the first interface class including a logical method for converting the page node tree. The terminal implements the first interface class after the first interface class is created; then creates, based on the first interface class, the first instance object for converting the page node tree; and finally creates, by using the first instance object as a creation parameter, the root component instance corresponding to the sub-application page to establish the binding relationship between the first instance object and the sub-application page.

During specific application, because different protocol modes correspond to different first interface classes, a first interface class that corresponds to a protocol mode and that is configured for converting the page node tree may be obtained based on the protocol mode. The logical method that is included in the first interface class and that is configured for converting the page node tree is preconfigured. During specific application, the first interface class may be specifically a TypeScript interface. TypeScript is an open source programming language built by adding static-type definitions based on JavaScript, and is a superset of JavaScript types. TypeScript supports the ECMAScript 6 standard (a standard for the JavaScript language), and can be compiled into pure JavaScript. For example, a correspondence between a protocol mode and a TypeScript interface may be shown in Table 1.

**Table 1**

| | |
|---|---|
| Protocol mode | Main TypeScript interface |
| Composed mode | glassEasel.composedBackend.Context |
| Shadow mode | glassEasel.backend.Context |
| DOM-like | glassEasel.domlikeBackend.Context |

During specific application, the terminal passes the first instance object as a creation parameter to a function for creating a root component instance, to create the root component instance. During specific application, if the function for creating a root component instance is in the form of glassEasel.Component.createWithContext() and the first instance object may be represented by myCustomBackend, the root component instance may be created by using a code segment "const rootComponent = glassEasel.Component.createWithContext(X, myCustomBackend)", const rootComponent indicating the root component instance, and X being another parameter that needs to be passed in during creation of the root component instance. For example, X may specifically include a body tag. The body tag is a tag used in a web page and represents a body part of the web page, to be specific, content visible to an object browsing the web page, and may include various types of content such as text, pictures, audio, and videos.

In this embodiment, the first interface class for converting the page node tree is obtained based on the protocol mode of the preconfigured interface protocol, to obtain the logical method for converting the page node tree. In this way, the first instance object for converting the page node tree can be created based on the first interface class, and the root component instance corresponding to the sub-application page is created by using the first instance object as a creation parameter, so that the binding relationship between the first instance object and the sub-application page can be established, and the logical method for converting the page node tree can be used.

In an embodiment, the creating, based on the first interface class, the first instance object for converting the page node tree includes:
creating, by using a first keyword for class-based interface implementation, a first implementation class corresponding to the first interface class, the first implementation class being configured for implementing the logical method for converting the page node tree in the first interface class; and
instantiating, by using a second keyword for class-based instance object creation, the first implementation class to create a first instance object corresponding to the first implementation class.

The implementing an interface based on a class means creating an implementation class based on an interface class. A logical method is defined in an interface class, and an implementation class corresponding to the interface class may be created, so that the logical method defined in the corresponding interface class can be implemented by using the implementation class, in other words, the corresponding interface class is implemented. The first keyword is a keyword used to implement an interface based on a class. For example, the first keyword may be specifically "implements". The creating an instance object based on a class means instantiating an implementation class to obtain an instance objects corresponding to the implementation class. The implementation class is static without occupying process memory. Therefore, the implementation class needs to be further instantiated, so that a logical method defined in an interface class implemented by the implementation class can be used. The second keyword is a keyword used to create a corresponding instance object based on a class. For example, the second keyword may be specifically "new". The first implementation class is a class for implementing the first interface class. The first instance object is an instance object obtained by instantiating the first implementation class.

Specifically, although the first interface class includes the logical method for converting the page node tree, the first interface class does not include a method body, and the logical method for converting the page node tree in the first interface class can be implemented only by using a specific class. In this embodiment, the first interface class is implemented by creating the first implementation class corresponding to the first interface class. In a case that the first interface class includes the logical method for converting the page node tree, the first implementation class is configured for implementing the logical method for converting the page node tree. After the first implementation class is created, because the first implementation class is static without occupying process memory, the terminal needs to further instantiate the first implementation class, so that the logical method for converting the page node tree can be used. In this case, the terminal may create the first instance object corresponding to the first implementation class by using the second keyword for instance object creation.

During specific application, assuming that the first keyword is "implements" and the second keyword is "new", a process of creating the first instance object may be expressed as follows: The first implementation class implements the first interface class; and the first instance object = new first implementation class(). During specific application, assuming that the first interface class is represented as glassEasel.composedBackend.Context, the first implementation class is represented as class MyCustomBackend, and the first instance object is represented as const myCustomBackend, a process of creating the first instance object may be expressed as follows:

```
             class MyCustomBackend implements glassEasel.composedBackend.Context {
             // Logical method for converting the page node tree
             };
             const myCustomBackend = new MyCustomBackend().
```

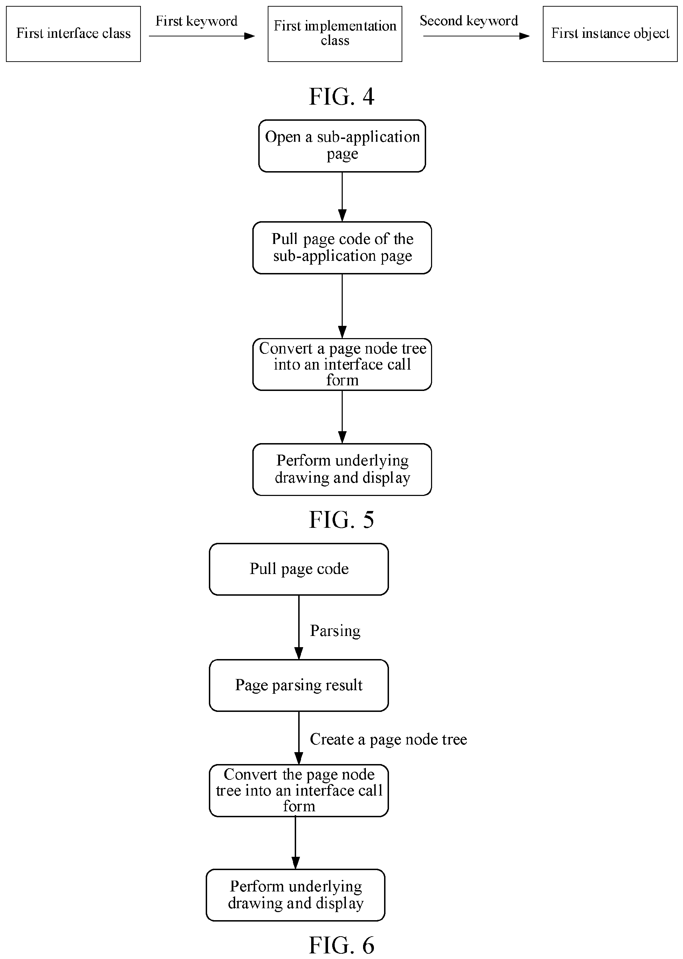

During specific application, a process of creating, based on the first interface class, the first instance object for converting the page node tree may be shown in FIG. 4. The terminal creates, by using the first keyword for class-based interface implementation, the first implementation class corresponding to the first interface class; and after the first implementation class is created, creates, by using the second keyword for instance object creation, the first instance object corresponding to the first implementation class.

In this embodiment, the first implementation class corresponding to the first interface class is created by using the first keyword for class-based interface implementation, so that the first interface class can be implemented; and the first instance object corresponding to the first implementation class is created by using the second keyword for instance object creation, so that the first implementation class can be instantiated, and the logical method for converting the page node tree can be used.

In an embodiment, the converting the page node tree into an interface call form by using the first instance object, to obtain interface call information corresponding to the page node tree includes:
starting from a root node of the page node tree, sequentially traversing page nodes in the page node tree based on first interface configuration information provided by the first instance object, to respectively determine first call information corresponding to each page node and obtain second call information corresponding to page configuration information of the page node tree; and
obtaining, based on the first call information and the second call information, the interface call information corresponding to the page node tree.

The first call information is call information for implementing a page node, and the page node is a node that appears on the sub-application page. The second call information is call information for implementing the page configuration information. The page configuration information is related information for configuring and generating the sub-application page. For example, the page configuration information may be specifically display-area-related information, such as a display area a, a display area height, and a display area pixel ratio, of the sub-application page. For another example, the page configuration information may be a theme of the sub-application page. For example, the theme of the sub-application page may be specifically "light". For another example, the theme of the sub-application page may be specifically "dark". For still another example, the page configuration information may be specifically a style sheet of the sub-application page. For still another example, the page configuration information may be specifically a focus on the sub-application page. The focus is a cursor, and is a blinking line on the sub-application page. For example, the focus may be specifically a small vertical line that blinks on the sub-application page.

Specifically, the first interface configuration information includes a plurality of invokable interfaces provided by the first instance object, and the plurality of invokable interfaces include interfaces corresponding to various page nodes, and also include an interface corresponding to the page configuration information. Therefore, during the conversion of the page node tree into the interface call form, starting from the root node of the page node tree, the terminal may sequentially traverse the page nodes in the page node tree based on the first interface configuration information provided by the first instance object, to respectively determine the first call information corresponding to each page node from the plurality of invokable interfaces and obtain the second call information corresponding to the page configuration information of the page node tree. The interface call information corresponding to the page node tree may be obtained by combining the first call information and the second call information.

During specific application, in addition to the interfaces corresponding to various page nodes and the interface corresponding to the page configuration information, the first interface configuration information further includes an interface for obtaining a protocol mode, an interface for destroying a first instance object, an interface for waiting for callback upon completion of next rendering, an interface for setting a global event callback function, an interface for obtaining a node based on coordinates, and the like. With respect to the interface for obtaining a protocol mode, an operation mode may be determined by using the interface. With respect to the interface for destroying a first instance object, a first instance object may be destroyed by using the interface. With respect to the interface for waiting for callback upon completion of next rendering, if a new attribute is set during callback, a Cascading Style Sheets (CSS) transition animation can be triggered. For the interface for setting a global event callback function, only one corresponding callback function exists, and may indicate a bubbling state, no special operation, disabling a default operation, or the like. With respect to the interface for obtaining a node based on coordinates, the interface may be configured to obtain a node at a coordinate location based on coordinates.

Corresponding to the interface for destroying a first instance object, an interface for creating a first instance object and an interface for obtaining a first instance object also exist. A first instance object may be created by invoking the interface for creating a first instance object, and the created first instance object may be obtained through the interface for obtaining a first instance object. During specific application, the terminal may create a first instance object by invoking the interface for creating a first instance object, and when creating a root component instance, may further obtain the created first instance object by invoking the interface for obtaining a first instance object, and establish a binding relationship between the first instance object and the sub-application page.

During specific application, with respect to a value such as the display area width, the display area height, or the display area pixel ratio of the sub-application page, the first interface configuration information includes a corresponding interface for obtaining the value such as the display area width, the display area height, or the display area pixel ratio, and the value is a returned value of the corresponding interface. With respect to the theme of the sub-application page, the first interface configuration information provides an interface for obtaining a string that represents the theme. A returned value of the interface for obtaining the string that represents the theme is the string that represents the theme.

During specific application, with respect to the style sheet of the sub-application page, the first interface configuration information includes interfaces respectively corresponding to registration of a style sheet, insertion of a style sheet entry, and disabling of an inserted style sheet. During specific application, with respect to the interface corresponding to registration of a style sheet, the interface may use a style sheet path and a CSS corresponding to the style sheet path as parameters. The CSS needs to be in an interpretable format. If the CSS includes reference logic such as interface call, content corresponding to a path of the CSS may also be registered by another style sheet registration call, and time of the registration may be earlier or later than a current registration. With respect to the interface for inserting a style sheet entry, the interface may use a style sheet path as a parameter. To be specific, content of the interface comes from a specified style sheet path. In addition, the interface for inserting a style sheet entry further includes an optional style range identifier. The style range identifier is configured for returning a new style sheet index. If the style range identifier is not a positive integer, the style range identifier is considered to be empty. When the style range identifier is empty, the style sheet is considered as a globally effective style sheet.

During specific application, with respect to the focus on the sub-application page, the first interface configuration information includes corresponding interfaces respectively for setting a page node on which the focus is located and obtaining the page node on which the focus is located. If a node cannot be focused, in other words, no focus exists on the sub-application page, the focus needs to be removed.

In this embodiment, starting from the root node of the page node tree, the page nodes in the page node tree are sequentially traversed based on the first interface configuration information provided by the first instance object, so that the first call information corresponding to each page node can be respectively determined, and the second call information corresponding to the page configuration information of the page node tree can be obtained. Then the interface call information corresponding to the page node tree may be obtained by combining the first call information and the second call information.

In an embodiment, the starting from a root node of the page node tree, sequentially traversing page nodes in the page node tree based on first interface configuration information provided by the first instance object, to respectively determine first call information corresponding to each page node includes:
for each page node in the page node tree, determining, from the first interface configuration information provided by the first instance object, first interface information matching a page node type of the page node, and determining, based on the first interface information, first call information corresponding to the page node.

The page node type is a type of a page node that appears on the sub-application page, and includes an ordinary node, a text node, a fragment node, a component node, a virtual node, or the like. The text node is a node that only carries text and that has no child node. The fragment node is a node that temporarily carries a node tree fragment, and is configured to represent a node array to facilitate batch insertion and removal of nodes. The component node and the virtual node are nodes that exist only in the shadow mode. The component node has its own shadow tree and may be a virtual node or a non-virtual node. The ordinary node is a node other than the text node and the fragment node in the composed mode. The first interface information is interface information that is in the first interface configuration information and that corresponds to a page node.

Specifically, the first interface configuration information includes a plurality of invokable interfaces provided by the first instance object, and the plurality of invokable interfaces include interfaces matching various page nodes. For each page node in the page node tree, the terminal determines, from the plurality of invokable interfaces included in the first interface configuration information provided by the first instance object, first interface information matching a page node type of the page node, and determines, based on the first interface information, first call information corresponding to the page node. During specific application, the terminal may convert node configuration information of the page node into an interface call form based on the first interface information, and then obtain the first call information corresponding to the page node.

During specific application, for the root node, the first interface configuration information includes a corresponding interface for obtaining the root node. In the shadow mode, the root node needs to be a component node. In the composed mode, the root node needs to be an ordinary node. For page nodes such as an ordinary node, a text node, and a fragment node, the first interface configuration information includes corresponding interfaces respectively for creating various page nodes.

In this embodiment, the first interface information of the page node may be determined from the first interface configuration information based on the page node type, and then the first call information of the page node may be determined based on the first interface information.

In an embodiment, the determining, based on the first interface information, first call information corresponding to the page node includes:
obtaining a second instance object based on the first interface information, the second instance object providing second interface configuration information for converting the page node tree;
obtaining, by using the second interface configuration information provided by the second instance object, second interface information corresponding to the page node; and
obtaining, based on the first interface information and the second interface information, the first call information corresponding to the page node.

The second instance object is a custom instance object for converting a page node, and includes a collection of programs for converting a page node. The second interface configuration information includes invokable interfaces provided by the second instance object and descriptions of the interfaces. The second interface information is interface information that is in the second interface configuration information and that corresponds to a page node.

Specifically, when the page node needs to be converted into an interface call form, the terminal obtains the second instance object based on the first interface information, the second instance object providing the second interface configuration information for converting the page node tree. After the second instance object is obtained, the second interface information corresponding to the page node may be obtained by using the second interface configuration information provided by the second instance object. Then the first call information corresponding to the page node may be obtained by combining the first interface information and the second interface information. The created second instance object is a returned value for the first interface information. Therefore, the terminal can directly obtain the second instance object based on the first interface information.

During specific application, the second interface configuration information includes invokable interfaces provided by the second instance object and descriptions of the interfaces. The obtaining, by using the second interface configuration information provided by the second instance object, second interface information corresponding to the page node is: determining, based on the second interface configuration information, an interface for implementing the page node from the invokable interfaces provided by the second instance object, to convert the page node into the interface call form.

In this embodiment, on the basis of obtaining the second instance object based on the first interface information, the second interface information corresponding to the page node may be obtained by using the second interface configuration information provided by the second instance object, so that the first call information corresponding to the page node can be obtained by combining the first interface information and the second interface information.

In an embodiment, the sub-application page processing method further includes:
creating, by using the first instance object, a second interface class for converting a page node, the second interface class including a logical method for converting a page node;
creating, by using a first keyword for class-based interface implementation, a second implementation class corresponding to the second interface class, the second implementation class being configured for implementing the logical method for converting a page node in the second interface class; and
instantiating, by using a second keyword for class-based instance object creation, the second implementation class to create a second instance object corresponding to the second implementation class.

Specifically, before determining the first interface information of the page node, the terminal needs to first create the second instance object by using the first instance object. When creating the second instance object by using the first instance object, the terminal may first create the second interface class for converting the page node; then create, by using the first keyword for class-based interface implementation, the second implementation class corresponding to the second interface class, to implement the logical method for converting a page node in the second interface class; and finally instantiate, by using the second keyword for class-based instance object creation, the second implementation class to create the second instance object corresponding to the second implementation class.

Although the second interface class includes the logical method for converting a page node, the second interface class does not include a method body, and the logical method for converting a page node in the second interface class can be implemented only by using a specific class. In this embodiment, the second interface class is implemented by creating the second implementation class corresponding to the second interface class. To be specific, the second implementation class is configured for implementing the logical method for converting a page node. After the second implementation class is created, because the second implementation class is static without occupying process memory, the terminal needs to further instantiate the second implementation class, so that the logical method for converting a page node can be used. In this case, the terminal may create the second instance object corresponding to the second implementation class by using the second keyword for class-based instance object creation.

In this embodiment, the second implementation class corresponding to the second interface class is created by using the second keyword for class-based interface implementation, so that the second interface class can be implemented; and the second instance object corresponding to the second implementation class is created by using the second keyword for class-based instance object creation, so that the second implementation class can be instantiated, and the logical method for converting a page node can be used. In an embodiment, the obtaining, by using the second interface configuration information provided by the second instance object, second interface information corresponding to the page node includes:
obtaining, based on node configuration information of the page node, the second interface information corresponding to the page node from the second interface configuration information provided by the second instance object.

The node configuration information is related information for configuring and generating the page node. For example, the node configuration information may be specifically node attribute information such as a node identifier, a range identifier, a node style, a node pattern, text content, a bounding rectangular area of the node, and an internal scroll position of the node. For another example, the node configuration information may be specifically an association relationship between a node and another node in the page node tree. For still another example, the node configuration information may be specifically node environment information, and the node environment information is configured for indicating whether the node is a component node.

Specifically, the second interface configuration information includes a plurality of invokable interfaces provided by the second instance object, and the plurality of invokable interfaces include an interface corresponding to the node configuration information. Therefore, the terminal may obtain, based on the second interface configuration information provided by the second instance object, the second interface information corresponding to the page node from the plurality of invokable interfaces.

During specific application, in addition to the interface corresponding to the node configuration information, the second interface configuration information further includes an interface for releasing a node and an interface for indicating that node-related information has been created. The interface for releasing a node may be configured to release a node. The interface for indicating that node-related information has been created is configured to indicate that the node-related information has been created, and set an associated value for the node. For a node other than a text node, the interface for indicating that node-related information has been created is invoked once, to indicate that the node-related information has been created and a next node may be further created.

During specific application, with respect to the node attribute information such as the node identifier, the range identifier, the node style, the node pattern, the text content, the bounding rectangular area of the node, and the internal scroll position of the node, the second interface configuration information includes an interface corresponding to setting of each node attribute. In addition, the second interface configuration information further provides other interfaces for setting other node attributes and removing other node attributes, to facilitate setting of node attributes.

During specific application, the interface corresponding to setting of each node attribute includes an interface for setting a node as a slot node and an interface for setting a target slot of a node. The slot node is configured to carry a child node provided when a component is referenced. Further, a node may be set as a slot-inherit node through the interface for setting a target slot of a node. For the slot-inherit node, a child node of the slot-inherit node is not regarded as a child node in the page node tree, but as a sibling node following the slot-inherit node. In this way, these child nodes have different target slots. A node is set as a slot-inherit node only when the node is in an initialization stage and has no child node. After a node is set as a slot-inherit node, the node is not to be set as a non-slot-inherit node.

During specific application, for an interface for setting a range identifier of a node, the interface is invoked at most once for a same node. In other words, a range identifier of a node is set at most once. When the interface is used, if a parameter passed in is not a positive integer, the parameter is considered to be empty. During matching against a style rule, if a node selector (for example, a tag name selector or an ID selector) other than a class is used for matching against the node, a range identifier of a style sheet needs to be empty or equal to a range identifier of the node. In the shadow mode, the interface is invoked only for an ordinary node and a non-virtual component node. In the composed mode, the interface is invoked only for an ordinary node.

During specific application, for an interface for setting a node style, in the shadow mode, the interface is invoked only for an ordinary node and a non-virtual component node; and in the composed mode, the interface is invoked only for an ordinary node. For an interface for adding a node style category, if a style category identifier is not a non-negative integer, the style category identifier is considered to be empty. During matching against a style rule, if the style category is used for matching against the node, a range identifier of a style sheet needs to be empty or equal to a style category identifier of the style category. In the shadow mode, the interface is invoked only for an ordinary node and a non-virtual component node. In the composed mode, the interface is invoked only for an ordinary node.

During specific application, for an interface for removing a specified style category, both a name and a style category identifier need to be matched. If the style category identifier is not a non-negative integer, the style category identifier is considered to be empty. In the shadow mode, the interface is invoked only for an ordinary node and a non-virtual component node. In the composed mode, the interface is invoked only for an ordinary node.

During specific application, for an interface for obtaining a bounding rectangular area of a node, if the node is not a regular rectangular area (for example, the node is inline text or a rotated rectangle), a minimum bounding rectangular area of the node needs to be calculated. If the node has no layout information, an all-0 value is returned. For an interface for obtaining an internal scroll position of a node, if the node is not scrollable, a position value 0 and a size value of the node are returned.

During specific application, for an association relationship between a node and another node in the page node tree, the second interface configuration information includes an interface corresponding to setting of each association relationship. For example, the association relationship herein may be specifically: appending a child node, removing a child node, inserting a child node, deleting a node, appending a plurality of nodes, or deleting and inserting a node.

During specific application, for an interface for removing a child node, the removed child node may be subsequently used again. If a node index number is provided when the child node is removed, the node index number needs to be equal to a sequence number of the child node in a child node list. If the node index number is not a non-negative integer, the node index number is considered to be unassigned with a value.

During specific application, for an interface for inserting a child node, the second interface configuration information provides a plurality of interfaces for selection, and each interface has different behaviors based on different parameters. Specifically, for an interface with an identifier of a previous child node and a node index number as parameters, if no identifier of a previous child node or node index number is provided, a child node is appended equivalently; if an identifier of a previous child node or a node index number is provided, a child node is equivalently inserted before a child node corresponding to the identifier of the previous child node or a child node corresponding to the node index number; or if both an identifier of a previous child node and a node index number are provided, the node index number needs to be equal to a sequence number of a child node corresponding to the identifier of the previous child node in a child node list, and if the node index number is not a non-negative integer, the node index number is considered to be unassigned with a value, and it can be ensured that an inserted child node has no parent node.

For an interface with an identifier of a next child node and a node index number as parameters, if no identifier of a next child node or node index number is provided, a child node is appended equivalently; if an identifier of a next child node or a node index number is provided, a child node corresponding to the identifier of the next child node or a child node corresponding to the node index number is replaced; or if both an identifier of a next child node and a node index number are provided, the node index number needs to be equal to a sequence number of a node corresponding to the identifier of the next child node in a child node list, and if the node index number is not a non-negative integer, the node index number is considered to be unassigned with a value, and it can be ensured that an inserted child node has no parent node.

During specific application, for an interface for deleting a node, if a node identifier and a node quantity are provided, starting from the node identifier, nodes corresponding to the node quantity are deleted. For an interface for appending a plurality of nodes, all nodes included in a segment node that is used as a parameter may be appended. The segment node is to be cleared after the appending, but may be used again. For an interface for deleting and inserting a node, if a node identifier and a node quantity are provided, starting from the node identifier, nodes corresponding to the node quantity are deleted, and all nodes included in a segment node that is used as a parameter are appended.

In this embodiment, the second interface information corresponding to the page node may be obtained, based on the node configuration information of the page node, from the second interface configuration information provided by the second instance object, to implement interface call conversion for the page node.

In an embodiment, the obtaining, based on the first interface information and the second interface information, the first call information corresponding to the page node includes:
when the page node is a component node, obtaining a pre-created third instance object based on the second interface information, the third instance object being an instance object for converting the component node;
obtaining, by using the third instance object, third interface information corresponding to the component node; and
obtaining, based on the first interface information, the second interface information, and the third interface information that correspond to the component node, first call information corresponding to the component node.

The component node is a component-type node. Based on an idea of components, a sub-application page may be divided into reusable modules, and each module is a component. A sub-application page is obtained by combining several components, and a complex component may also be obtained by combining several simple components. In this embodiment, the component node mainly appears in the shadow mode and has its own component node tree. The third instance object is a pre-created instance for converting a component node, and includes a collection of programs for converting a component node. The third interface information is interface information that is in interface configuration information provided by the third instance object and that corresponds to a component node.

Specifically, when the page node is a component node, the terminal obtains the pre-created third instance object based on interface information for obtaining node environment information in the second interface information; obtains, by using a shadow tree environment instance, the third interface information corresponding to the component node; and combines the first interface information, the second interface information, and the third interface information that correspond to the component node, to obtain the first call information corresponding to the component node. The created third instance object is a returned value of the interface information for obtaining node environment information. Therefore, if the page node is a component node, the terminal can obtain the created third instance object based on the interface information for obtaining node environment information.

During specific application, before the third instance object is used, the third instance object needs to be pre-created. During creation of the third instance object, a component interface class including a logical method for converting a component node may be first created, then a component implementation class is created by using a first keyword for class-based interface implementation, and then the component implementation class may be instantiated by using a second keyword for class-based instance object creation, to create the third instance object.

In this embodiment, in a case that the page node is a component node, the pre-created third instance object can be obtained based on the second interface information, so that the third interface information corresponding to the component node can be obtained by using the third instance object, and the first call information corresponding to the component node is obtained by combining the first interface information, the second interface information, and the third interface information that correspond to the component node.

In an embodiment, the obtaining, by using the third instance object, third interface information corresponding to the component node includes:
starting from a root node of the component node, sequentially traversing child nodes in the component node based on third interface configuration information provided by the third instance object, to respectively determine child node call information corresponding to each child node; and
obtaining, based on the child node call information corresponding to each child node, the third interface information corresponding to the component node.

The third interface configuration information includes invokable interfaces provided by the third instance object and descriptions of the interfaces. The third interface information is interface information corresponding to a component node in the third interface configuration information. The child node call information is call information for implementing a child node.

Specifically, the third interface configuration information includes a plurality of invokable interfaces provided by the third instance object, and the plurality of invokable interfaces include interfaces corresponding to child nodes in the component node. Therefore, during conversion of the component node into an interface call form, starting from a root node of the component node tree, the terminal may sequentially traverse the child nodes in the component node based on the third interface configuration information provided by the third instance object, to respectively determine child node call information corresponding to each child node from the plurality of invokable interfaces, and combine child node call information respectively corresponding to all the child nodes to obtain the third interface information corresponding to the component node.

In this embodiment, starting from the root node of the component node, the child nodes in the component node are sequentially traversed based on the third interface configuration information provided by the third instance object, so that child node call information corresponding to each child node can be respectively determined. Then the third interface information corresponding to the component node may be obtained by combining the child node call information respectively corresponding to all the child nodes.

In an embodiment, the starting from a root node of the component node, sequentially traversing child nodes in the component node based on third interface configuration information provided by the third instance object, to respectively determine child node call information corresponding to each child node includes:
for each child node in the component node, determining, from the third interface configuration information provided by the third instance object, child node interface information matching a child node type of the child node; and
obtaining a second instance object based on the child node interface information, and obtaining, by using the second instance object, child node call information corresponding to the child node.

The child node type is a type of a child node that appears in the component node, and includes an ordinary node, a text node, a component node, an external component node, a virtual node, or the like. The external component node is a pre-created node tree that can be directly spliced with another part.

Specifically, the third interface configuration information includes a plurality of invokable interfaces provided by the third instance object, and the plurality of invokable interfaces include interfaces matching various child nodes. For each child node in the component node, the terminal determines, from the plurality of invokable interfaces included in the third interface configuration information provided by the third instance object, child node interface information matching a child node type of the child node, obtains a second instance object based on the child node interface information, and obtains, by using the second instance object, child node call information corresponding to the child node. The created second instance object is a returned value of the child node interface information. Therefore, the terminal can obtain the created second instance object based on the child node interface information.

During specific application, the second instance object provides second interface configuration information for converting a child node, and the second interface configuration information includes invokable interfaces provided by the second instance object and descriptions of the interfaces. The obtaining, by using the second instance object, child node call information corresponding to the child node is: determining, based on the second interface configuration information, an interface for implementing the child node from the invokable interfaces provided by the second instance object, to convert the child node into an interface call form. The child node is also a page node. Therefore, a manner of obtaining, by using a node instance, the child node call information corresponding to the child node in this embodiment is similar to the manner of obtaining, by using the second instance object, the second interface information corresponding to the page node. Details are not described herein again in this embodiment.

In this embodiment, the child node interface information of the child node may be determined from the third interface configuration information based on the child node type, and then the second instance object may be obtained based on the child node interface information, so that the child node call information corresponding to the child node can be obtained by using the second instance object.

In an embodiment, the obtaining, by using the second instance object, child node call information corresponding to the child node includes:
obtaining, based on child node configuration information of the child node, the child node call information corresponding to the child node from second interface configuration information provided by the second instance object.

The child node configuration information is related information for configuring and generating the child node. For example, the child node configuration information may be specifically child node attribute information such as a node identifier, a range identifier, a node style, a node pattern, text content, a bounding rectangular area of the node, and an internal scroll position of the node. For another example, the child node configuration information may be specifically an association relationship between a child node and another child node in the component node. For still another example, the child node configuration information may be specifically child node environment information, and the child node environment information is configured for indicating whether the child node is a component node.

Specifically, the second interface configuration information includes a plurality of invokable interfaces provided by the second instance object, and the plurality of invokable interfaces include an interface corresponding to the child node configuration information. Therefore, the terminal may obtain, based on the second interface configuration information provided by the second instance object, the child node call information corresponding to the child node from the plurality of invokable interfaces. The child node is also a page node. Therefore, a manner of obtaining, based on the child node configuration information, the child node call information corresponding to the child node in this embodiment is similar to the manner of obtaining, based on the node configuration information, the second interface information corresponding to the page node. Details are not described herein again in this embodiment.

In this embodiment, the child node call information corresponding to the child node can be obtained based on the child node configuration information of the child node.

In an embodiment, the parsing the page code to obtain a page parsing result includes:
determining a markup language used to write the page code, and compiling the page code by using a markup language compiler corresponding to the markup language to obtain the page parsing result.

Specifically, the markup language compiler is a collection of programs for compiling code written in the markup language. The code written in the markup language is compiled, so that the code written in the markup language can be converted into code in another programming language. Therefore, when parsing the page code, the terminal may first determine the markup language used to write the page code, and then compile the page code by using the markup language compiler corresponding to the markup language to obtain the page parsing result, to be specific, code that can be directly interpreted by a runtime environment of a sub-application rendering layer on the terminal

In this embodiment, the markup language used to write the page code is first determined, so that the page code can be compiled by using the markup language compiler corresponding to the markup language to obtain the page parsing result.

In an embodiment, as shown in FIG. 5, the sub-application page processing method in this application is described by using a schematic flowchart. The sub-application page processing method specifically includes the following operations:

When a sub-application page is opened (to be specific, an event of requesting to obtain the sub-application page is detected), page code of the sub-application page is pulled (in other words, the page code of the sub-application page is obtained). The page code is parsed to obtain a page parsing result, and a code set in the page parsing result is traversed to create a page node tree corresponding to the sub-application page. A first instance object for converting the page node tree is created, and a binding relationship between the first instance object and the sub-application page is established. In a case that the binding relationship is established, the page node tree is converted into an interface call form by using the first instance object, to obtain interface call information corresponding to the page node tree. Underlying drawing and display are performed based on the interface call information, in other words, page drawing is performed based on the interface call information, to generate the sub-application page.

The first instance object is created based on a preconfigured interface protocol. The interface protocol in this application is an intermediate bridge that links a sub-application component organization framework and page rendering, and is the basis for converting the page node tree into the interface call form. The page node tree can be converted into an underlying interface call through the interface protocol and then passed to underlying rendering for interface display.

To better describe the sub-application page processing method in this application, the following first describes a process of code writing by a developer to drawing and display of a sub-application page. As shown in FIG. 6, the process specifically includes the following operations: A developer writes page code of a sub-application page. When the sub-application page is opened, a sub-application component organization framework on a terminal pulls the page code. After the page code is obtained, the page code is parsed to obtain a page parsing result, and a code set in the page parsing result is traversed to create a page node tree corresponding to the sub-application page, the page node tree being a tree structure generated based on a page node of the sub-application page. A first instance object for converting the page node tree is created, and a binding relationship between the first instance object and the sub-application page is established. In a case that the binding relationship is established, the page node tree is converted into an interface call form by using the first instance object, to obtain interface call information corresponding to the page node tree. The interface call information is output to a graphics processing unit (GPU) in the terminal. The GPU performs underlying drawing and display based on the interface call information, in other words, performs page drawing based on the interface call information, to generate the sub-application page.

The sub-application component organization framework is embedded in a sub-application base library to provide basic support for sub-application components. All components in the sub-application, including built-in components and custom components, are organized and managed by the sub-application component organization framework. For example, the sub-application component organization framework may be specifically GlassEasel, which is a general-purpose component-based interface framework.

In an embodiment, that a first instance object for converting the page node tree is created, a binding relationship between the first instance object and the sub-application page is established, and in a case that the binding relationship is established, the page node tree is converted into an interface call form by using the first instance object, to obtain interface call information corresponding to the page node tree may be understood as follows: The page node tree is converted into the interface call form by using a custom backend. The custom backend may be referred to as a rendering backend. The sub-application component organization framework may pass the page node tree generated by the sub-application component organization framework to the rendering backend. The rendering backend converts the received page node tree into the interface call form to obtain the interface call information corresponding to the page node tree, and outputs the interface call information to the GPU in the terminal.

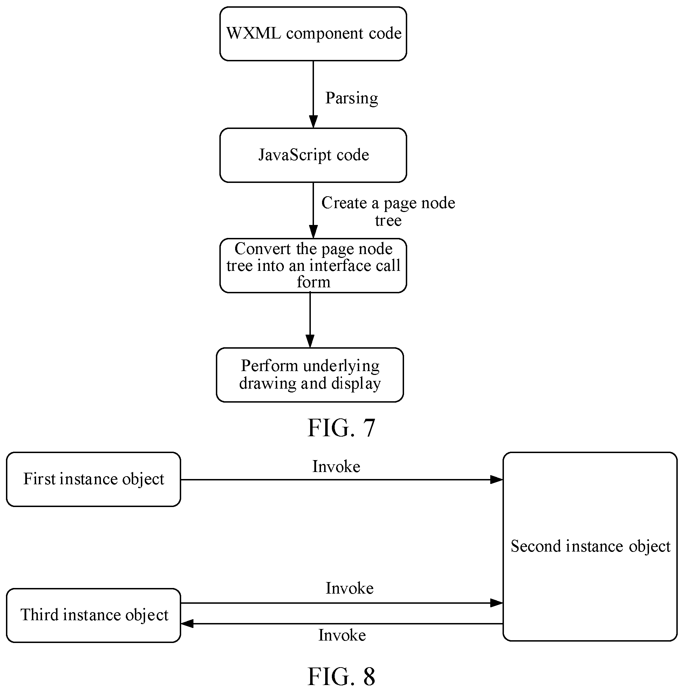

In an embodiment, in an example in which the page code is WXML component code and the page parsing result is JavaScript code, a process of code writing by a developer to drawing and display may be shown in FIG. 7. A developer writes WXML component code. When a sub-application page is opened, a sub-application component organization framework on a terminal pulls the WXML component code. After the WXML component code is obtained, the page code is parsed to obtain JavaScript code. A page node tree is converted into an interface call form through a custom backend based on the JavaScript code, to obtain interface call information corresponding to the page node tree. The interface call information is output to a GPU in the terminal. The GPU performs underlying drawing and display based on the interface call information, in other words, performs page drawing based on the interface call information, to generate the sub-application page.

Before the sub-application page processing method in this application emerges, a sub-application page uses web DOM as a rendering backend. However, the web DOM needs to be provided by a browser or a webview. Due to heavy historical load of the web DOM and too many components of a DOM interface, sub-application page rendering performance is not as good as that of a native framework. Based on this, the inventors propose the sub-application page processing method in this application, and the original web DOM rendering backend is replaced with the rendering backend in the sub-application page processing method. The page node tree is directly converted into the interface call form without using a DOM interface as an intermediate bridge for page rendering, so that a page rendering speed can be increased.

In an embodiment, the rendering backend in this application mainly has two modes: a shadow mode and a composed mode. In the shadow mode, the sub-application component organization framework operates only in the component node tree, and the rendering backend completes conversion from the component node tree to the page node tree. In the composed mode, the sub-application component organization framework operates in the component node tree and the page node tree. Interfaces required in the two modes are slightly different. The rendering backend needs to provide an interface for the sub-application component organization framework, so that the sub-application component organization framework can correctly output required information to the rendering backend.

An interface protocol of the rendering backend may be a protocol with TypeScript as a basic language, and a corresponding interface form may be an object-oriented form. For example, the interface provided by the rendering backend may be in the form of Context#mode: ContextMode, Context#registerStyleSheetContent(path: string, content: any), or the like. Interfaces provided by the rendering backend are mainly classified into two categories. Among the interfaces, an interface expressed in the form of Class#method(...) represents an interface method corresponding to a class, to be specific, Class.prototype.method(...). An interface marked as async is unified into the form of a callback function. To be specific, async Class#method(...): T is actually Class.prototype.method(..., (T) => void).

The rendering backend in this application mainly provides three types of instances: the first instance object, the second instance object, and the third instance object. Different types of instances provide different interfaces for the sub-application component organization framework to invoke. For the first instance object, each first instance object may display a node tree on an interface. The second instance object may be created based on the first instance object. The third instance object may be obtained through the second instance object after being created. To be specific, a component node tree environment of a component may be obtained through the second instance object. For a child node in the component node tree, the child node may also be converted into an interface call form by using the second instance object. Therefore, an call relationship between the three types of instances provided by the rendering backend may be shown in FIG. 8. The first instance object may invoke the second instance object, the second instance object may invoke the third instance object, and the third instance object may invoke the second instance object.

The inventors believe that, in the sub-application page processing method in this application, necessary backend interfaces are provided, more features are supported while features not to be used are abandon, and both operation in a component node tree and adaptation to a DOM interface are supported, so that a sub-application page rendering speed can be increased compared with that of the web DOM rendering backend. The features not to be used are features in the DOM interface that are not to be used for rendering a sub-application page.

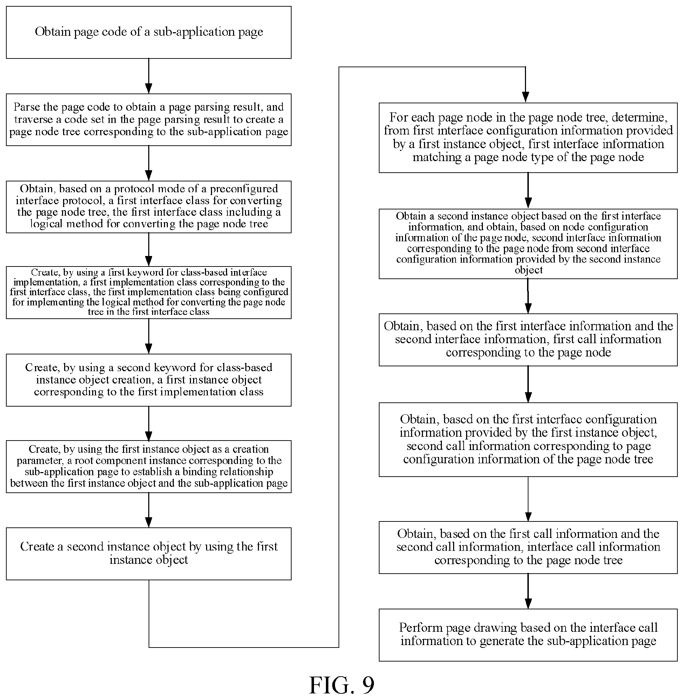

In an embodiment, as shown in FIG. 9, the sub-application page processing method in this application is described by using a schematic flowchart. The sub-application page processing method specifically includes the following operations:
When detecting an event of requesting to obtain a sub-application page, a terminal obtains page code of the sub-application page; parses the page code to obtain a page parsing result; traverses a code set in the page parsing result to create a page node tree corresponding to the sub-application page; obtains, based on a protocol mode of a preconfigured interface protocol, a first interface class for converting the page node tree, the first interface class including a logical method for converting the page node tree; creates, by using a first keyword for class-based interface implementation, a first implementation class corresponding to the first interface class, the first implementation class being configured for implementing the logical method for converting the page node tree in the first interface class; creates, by using a second keyword for class-based instance object creation, a first instance object corresponding to the first implementation class; and creates, by using the first instance object as a creation parameter, a root component instance corresponding to the sub-application page, to establish a binding relationship between the first instance object and the sub-application page.

In a case that the binding relationship is established, a second instance object is created by using the first instance object, the second instance object providing second interface configuration information for converting the page node tree. For each page node in the page node tree, first interface information matching a page node type of the page node is determined from first interface configuration information provided by the first instance object, a second instance object is obtained based on the first interface information, and second interface information corresponding to the page node is obtained, based on node configuration information of the page node, from second interface configuration information provided by the second instance object. First call information corresponding to the page node is obtained based on the first interface information and the second interface information, and second call information corresponding to page configuration information of the page node tree is obtained based on the first interface configuration information provided by the first instance object. Interface call information corresponding to the page node tree is obtained based on the first call information and the second call information. Page drawing is performed based on the interface call information to generate the sub-application page.

During specific application, after the sub-application page is generated, if another sub-application page needs to be displayed through switching, the terminal obtains page code of the another sub-application page, and then generates the another sub-application page based on the sub-application page processing method in the foregoing embodiments.

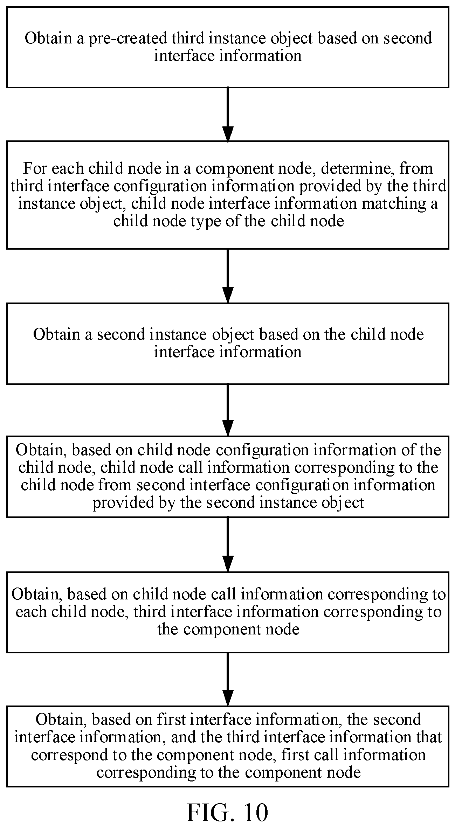

In an embodiment, if the protocol mode of the preconfigured interface protocol is the shadow mode, the page node may be a component node. If the page node is a component node, a process of obtaining first call information corresponding to the component node may be shown in FIG. 10. A terminal obtains a pre-created third instance object based on second interface information; for each child node in the component node, determines, from third interface configuration information provided by the third instance object, child node interface information matching a child node type of the child node; obtains a second instance object based on the child node interface information; obtains, based on child node configuration information of the child node, child node call information corresponding to the child node from second interface configuration information provided by the second instance object; obtains, based on child node call information corresponding to each child node, third interface information corresponding to the component node; and obtains, based on first interface information, the second interface information, and the third interface information that correspond to the component node, the first call information corresponding to the component node.

Although the operations are shown sequentially according to the instructions of the arrows in the flowcharts of the foregoing embodiments, the operations are not necessarily performed sequentially according to the sequence instructed by the arrows. Unless otherwise explicitly specified in this application, an execution sequence of the operations is not strictly limited, and the operations may be performed in other sequences. Moreover, at least some of the operations in the flowcharts in the foregoing embodiments may include a plurality of operations or a plurality of stages. The operations or stages are not necessarily performed at the same moment but may be performed at different moments. The operations or stages are not necessarily performed sequentially, but may be performed alternately with other operations or at least some of operations or stages of other operations.

Based on a same inventive concept, embodiments of this application further provide a sub-application page processing apparatus for implementing the foregoing sub-application page processing method. Implementation solutions provided by the apparatus for resolving problems are similar to the implementation solutions described in the foregoing method. Therefore, for specific limitations in one or more sub-application page processing apparatus embodiments provided below, refer to the limitations on the sub-application page processing method in the foregoing descriptions. Details are not described herein again.

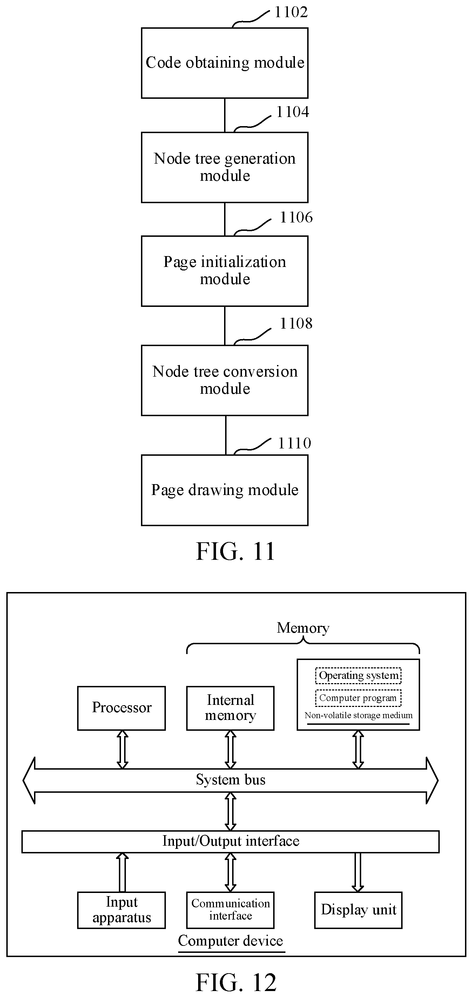

In an embodiment, as shown in FIG. 11, a sub-application page processing apparatus is provided, including: a code obtaining module 1102, a node tree generation module 1104, a page initialization module 1106, a node tree conversion module 1108, and a page drawing module 1110.

The code obtaining module 1102 is configured to: when an event of requesting to obtain a sub-application page is detected, obtain page code of the sub-application page, the sub-application page being a page displayed in a sub-application.

The node tree generation module 1104 is configured to parse the page code to obtain a page parsing result, and traverse a code set in the page parsing result to create a page node tree corresponding to the sub-application page, the page node tree being a tree structure generated based on a page node of the sub-application page.

The page initialization module 1106 is configured to create a first instance object for converting the page node tree, and establish a binding relationship between the first instance object and the sub-application page.

The node tree conversion module 1108 is configured to: in a case that the binding relationship is established, convert the page node tree into an interface call form by using the first instance object, to obtain interface call information corresponding to the page node tree.

The page drawing module 1110 is configured to perform page drawing based on the interface call information to generate the sub-application page.

In the foregoing sub-application page processing apparatus, when an event of requesting to obtain a sub-application page is detected, obtained page code of the sub-application page is parsed to obtain a page parsing result, and a code set in the page parsing result is traversed to create a page node tree representing a page structure of the sub-application page, so that the sub-application page can be represented in the form of the page node tree. A first instance object for converting the page node tree is created, and a binding relationship between the first instance object and the sub-application page is established, so that the created first instance object can be used during generation of the sub-application page. In this way, the first instance object can be directly used to convert the page node tree into an interface call form to obtain interface call information corresponding to the page node tree, and page drawing is performed based on the interface call information to generate the sub-application page. In the entire process, the page node tree is directly converted into the interface call form without using a DOM interface as an intermediate bridge for page rendering, so that a page rendering speed can be increased.

In an embodiment, the page initialization module is further configured to: obtain, based on a protocol mode of a preconfigured interface protocol, a first interface class for converting the page node tree, the first interface class including a logical method for converting the page node tree; create, based on the first interface class, the first instance object for converting the page node tree; and create, by using the first instance object as a creation parameter, a root component instance corresponding to the sub-application page to establish the binding relationship between the first instance object and the sub-application page.

In an embodiment, the page initialization module is further configured to: create, by using a first keyword for class-based interface implementation, a first implementation class corresponding to the first interface class, the first implementation class being configured for implementing the logical method for converting the page node tree in the first interface class; and instantiate, by using a second keyword for class-based instance object creation, the first implementation class to create a first instance object corresponding to the first implementation class.

In an embodiment, the node tree conversion module is further configured to: starting from a root node of the page node tree, sequentially traverse page nodes in the page node tree based on first interface configuration information provided by the first instance object, to respectively determine first call information corresponding to each page node and obtain second call information corresponding to page configuration information of the page node tree; and obtain, based on the first call information and the second call information, the interface call information corresponding to the page node tree.

In an embodiment, the node tree conversion module is further configured to: for each page node in the page node tree, determine, from the first interface configuration information provided by the first instance object, first interface information matching a page node type of the page node; and determine, based on the first interface information, first call information corresponding to the page node.

In an embodiment, the node tree conversion module is further configured to: obtain a second instance object based on the first interface information, the second instance object providing second interface configuration information for converting the page node tree; obtain, by using the second interface configuration information provided by the second instance object, second interface information corresponding to the page node; and obtain, based on the first interface information and the second interface information, the first call information corresponding to the page node.

In an embodiment, the node tree conversion module is further configured to: create, by using the first instance object, a second interface class for converting a page node, the second interface class including a logical method for converting a page node; create, by using a first keyword for class-based interface implementation, a second implementation class corresponding to the second interface class, the second implementation class being configured for implementing the logical method for converting a page node in the second interface class; and instantiate, by using a second keyword for class-based instance object creation, the second implementation class to create a second instance object corresponding to the second implementation class.

In an embodiment, the node tree conversion module is further configured to: obtain, based on node configuration information of the page node, the second interface information corresponding to the page node from the second interface configuration information provided by the second instance object.

In an embodiment, the node tree conversion module is further configured to: when the page node is a component node, obtain a pre-created third instance object based on the second interface information, the third instance object being an instance object for converting the component node; obtain, by using the third instance object, third interface information corresponding to the component node; and obtain, based on the first interface information, the second interface information, and the third interface information that correspond to the component node, first call information corresponding to the component node.

In an embodiment, the node tree conversion module is further configured to: starting from a root node of the component node, sequentially traverse child nodes in the component node based on third interface configuration information provided by the third instance object, to respectively determine child node call information corresponding to each child node; and obtain, based on the child node call information corresponding to each child node, the third interface information corresponding to the component node.

In an embodiment, the node tree conversion module is further configured to: for each child node in the component node, determine, from the third interface configuration information provided by the third instance object, child node interface information matching a child node type of the child node; obtain a second instance object based on the child node interface information; and obtain, by using the second instance object, child node call information corresponding to the child node.

In an embodiment, the node tree conversion module is further configured to: obtain, based on child node configuration information of the child node, the child node call information corresponding to the child node from second interface configuration information provided by the second instance object.

In an embodiment, the node tree generation module is further configured to: determine a markup language used to write the page code, and compile the page code by using a markup language compiler corresponding to the markup language to obtain the page parsing result.

All of some of the modules in the sub-application page processing apparatus may be implemented by software, hardware, and a combination thereof. The foregoing modules may be embedded in or independent of a processor of a computer device in a form of hardware, or may be stored in a memory of a computer device in a form of software, so that the processor can invoke the modules to perform operations corresponding to the modules.

In an embodiment, a computer device is provided. The computer device may be a terminal, and a diagram of an internal structure of the computer device may be shown in FIG. 12. The computer device includes a processor, a memory, an input/output interface, a communication interface, a display unit, and an input apparatus. The processor, the memory, and the input/output interface are connected through a system bus. The communication interface, the display unit, and the input apparatus are connected to the system bus through the input/output interface. The processor of the computer device is configured to provide computing and control capabilities. The memory of the computer device includes a non-volatile storage medium and an internal memory. The non-volatile storage medium stores an operating system and computer-readable instructions. The internal memory provides an operating environment for the operating system and the computer-readable instructions in the non-volatile storage medium. The input/output interface of the computer device is configured to exchange information between the processor and an external device. The communication interface of the computer device is configured for wired or wireless communication with an external terminal. A wireless mode may be implemented through Wi-Fi, a mobile cellular network, near field communication (NFC), or other technologies. The computer-readable instructions are executed by the processor to implement a sub-application page processing method. The display unit of the computer device is configured to form a visible picture, and may be a display screen, a projection apparatus, or a virtual reality imaging apparatus. The display screen may be a liquid crystal display screen or an e-ink display screen. The input apparatus of the computer device may be a touch layer covering the display screen, or may be a button, a trackball, or a touchpad disposed on a housing of the computer device, or may be an external keyboard, touchpad, mouse, or the like.

A person skilled in the art can understand that the structure shown in FIG. 12 is merely a block diagram of a partial structure related to a solution in this application, and does not constitute a limitation to the computer device to which the solution in this application is applied. Specifically, the computer device may include more or fewer components than those shown in the figure, or some components may be combined, or a different component layout may be used.

In an embodiment, a computer device is further provided, including a memory and a processor. The memory stores computer-readable instructions. When the processor executes the computer-readable instructions, the operations in the foregoing method embodiments are implemented.

In an embodiment, a computer-readable storage medium is provided, having computer-readable instructions stored therein. When the computer-readable instructions are executed by a processor, the operations in the foregoing method embodiments are implemented.

In an embodiment, a computer program product is provided, including computer-readable instructions. When the computer-readable instructions are executed by a processor, the operations in the foregoing method embodiments are implemented.

A person of ordinary skill in the art can understand that all or some of the processes of the methods in the foregoing embodiments may be implemented by computer-readable instructions instructing relevant hardware. The computer-readable instructions may be stored in a non-volatile computer-readable storage medium. When the computer-readable instructions are executed, the processes in the foregoing method embodiments may be implemented. Any reference to a memory, a database, or other media used in the embodiments provided in this application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, or the like. The volatile memory may include a random access memory (RAM), an external cache memory, or the like. For illustration rather than limitation, the RAM may have a plurality of forms, for example, a static random access memory (SRAM) or a dynamic random access memory (DRAM). The database in the embodiments provided in this application may include at least one of a relational database and a non-relational database. The non-relational database may include but is not limited to a blockchain-based distributed database and the like. The processor in the embodiments provided in this application may be but is not limited to a general-purpose processor, a central processing unit, a graphics processing unit, a digital signal processor, a programmable logic device, a data processing logic device based on quantum computing, and the like.

Technical features of the foregoing embodiments may be combined in any manners. To make description concise, not all possible combinations of the technical features in the foregoing embodiments are described. However, the combinations of these technical features shall be considered as falling within the scope recorded by this specification provided that no conflict exists.

The foregoing embodiments merely describe several implementations of this application more specifically and in more detail, but cannot be understood as a limitation to the patent scope of the present disclosure. A person of ordinary skill in the art may also make several variations and improvements without departing from the concept of this application. All these variations and improvements fall within the protection scope of this application. Therefore, the patent protection scope of this application shall be subject to the appended claims.

## Claims

1. A sub-application page processing method performed by a computer device, comprising:
in response to an event of requesting to obtain a sub-application page being detected, obtaining page code of the sub-application page, the sub-application page being a page displayed when running a sub-application;
parsing the page code to obtain a page parsing result, and traversing a code set in the page parsing result to create a page node tree based on a page node of the sub-application page;
creating a first instance object for converting the page node tree, and establishing a binding relationship between the first instance object and the sub-application page;
converting the page node tree into an interface call form by using the first instance object, to obtain interface call information corresponding to the page node tree; and
generating the sub-application page based on the interface call information.

2. The method according to claim 1, wherein the creating the first instance object for converting the page node tree, and establishing the binding relationship between the first instance object and the sub-application page comprises:
obtaining, based on a protocol mode of a preconfigured interface protocol, a first interface class for converting the page node tree, the first interface class comprising a logical method for converting the page node tree;
creating, based on the first interface class, the first instance object for converting the page node tree; and
creating, by using the first instance object as a creation parameter, a root component instance corresponding to the sub-application page to establish the binding relationship between the first instance object and the sub-application page.

3. The method according to claim 2, wherein the creating, based on the first interface class, the first instance object for converting the page node tree comprises:
creating, by using a first keyword for class-based interface implementation, a first implementation class corresponding to the first interface class, the first implementation class being configured for implementing the logical method for converting the page node tree in the first interface class; and
instantiating, by using a second keyword for class-based instance object creation, the first implementation class to create a first instance object corresponding to the first implementation class.

4. The method according to any one of claims 1 to 3, wherein the converting the page node tree into the interface call form by using the first instance object, to obtain interface call information corresponding to the page node tree comprises:
starting from a root node of the page node tree, sequentially traversing page nodes in the page node tree based on first interface configuration information provided by the first instance object, to respectively determine first call information corresponding to each page node and obtain second call information corresponding to page configuration information of the page node tree; and
obtaining, based on the first call information and the second call information, the interface call information corresponding to the page node tree.

5. The method according to claim 4, wherein the starting from the root node of the page node tree, sequentially traversing the page nodes in the page node tree based on the first interface configuration information provided by the first instance object, to respectively determine the first call information corresponding to each page node comprises:
for each page node in the page node tree, determining, from the first interface configuration information provided by the first instance object, first interface information matching a page node type of the page node, and determining, based on the first interface information, first call information corresponding to the page node.

6. The method according to claim 5, wherein the determining, based on the first interface information, the first call information corresponding to the page node comprises:
obtaining a second instance object based on the first interface information, the second instance object providing second interface configuration information for converting the page node tree;
obtaining, by using the second interface configuration information provided by the second instance object, second interface information corresponding to the page node; and
obtaining, based on the first interface information and the second interface information, the first call information corresponding to the page node.

7. The method according to claim 6, wherein the method further comprises:
creating, by using the first instance object, a second interface class for converting a page node, the second interface class comprising a logical method for converting a page node;
creating, by using a first keyword for class-based interface implementation, a second implementation class corresponding to the second interface class, the second implementation class being configured for implementing the logical method for converting a page node in the second interface class; and
instantiating, by using a second keyword for class-based instance object creation, the second implementation class to create a second instance object corresponding to the second implementation class.

8. The method according to claim 6, wherein the obtaining, by using the second interface configuration information provided by the second instance object, the second interface information corresponding to the page node comprises:
obtaining, based on node configuration information of the page node, the second interface information corresponding to the page node from the second interface configuration information provided by the second instance object.

9. The method according to claim 6, wherein the obtaining, based on the first interface information and the second interface information, the first call information corresponding to the page node comprises:
when the page node is a component node, obtaining a pre-created third instance object based on the second interface information, the third instance object being an instance object for converting the component node;
obtaining, by using the third instance object, third interface information corresponding to the component node; and
obtaining, based on the first interface information, the second interface information, and the third interface information that correspond to the component node, first call information corresponding to the component node.

10. The method according to claim 9, wherein the obtaining, by using the third instance object, the third interface information corresponding to the component node comprises:
starting from a root node of the component node, sequentially traversing child nodes in the component node based on third interface configuration information provided by the third instance object, to respectively determine child node call information corresponding to each child node; and
obtaining, based on the child node call information corresponding to each child node, the third interface information corresponding to the component node.

11. The method according to claim 10, wherein the starting from the root node of the component node, sequentially traversing the child nodes in the component node based on the third interface configuration information provided by the third instance object, to respectively determine the child node call information corresponding to each child node comprises:
for each child node in the component node, determining, from the third interface configuration information provided by the third instance object, child node interface information matching a child node type of the child node; and
obtaining a second instance object based on the child node interface information, and obtaining, by using the second instance object, child node call information corresponding to the child node.

12. The method according to claim 11, wherein the obtaining, by using the second instance object, the child node call information corresponding to the child node comprises:
obtaining, based on child node configuration information of the child node, the child node call information corresponding to the child node from second interface configuration information provided by the second instance object.

13. The method according to any one of claims 1 to 12, wherein the parsing the page code to obtain the page parsing result comprises:
determining a markup language used to write the page code, and compiling the page code by using a markup language compiler corresponding to the markup language to obtain the page parsing result.

14. A sub-application page processing apparatus, comprising:
a code obtaining module, configured to: in response to an event of requesting to obtain a sub-application page being detected, obtain page code of the sub-application page, the sub-application page being a page displayed when running a sub-application;
a node tree generation module, configured to parse the page code to obtain a page parsing result, and traverse a code set in the page parsing result to create a page node tree based on a page node of the sub-application page;
a page initialization module, configured to create a first instance object for converting the page node tree, and establish a binding relationship between the first instance object and the sub-application page;
a node tree conversion module, configured to: convert the page node tree into an interface call form by using the first instance object, to obtain interface call information corresponding to the page node tree; and
a page drawing module, configured to generate the sub-application page based on the interface call information.

15. A computer device, comprising a memory and a processor, the memory storing computer-readable instructions, and the operations of the method according to any one of claims 1 to 13 being implemented when the processor executes the computer-readable instructions.

16. A computer-readable storage medium, having computer-readable instructions stored therein, the operations of the method according to any one of claims 1 to 13 being implemented when the computer-readable instructions are executed by a processor.

17. A computer program product, comprising computer-readable instructions, the operations of the method according to any one of claims 1 to 13 being implemented when the computer-readable instructions are executed by a processor.
